(19) Europäisches Patentamt
European Patent Office
Office européen des brevets

(11) **EP 3 837 323 B1**

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **19744743.6**

(22) Anmeldetag: **01.08.2019**

(51) Internationale Patentklassifikation (IPC):
*C09D 7/45* (2018.01)   *C04B 24/32* (2006.01)
*C04B 40/00* (2006.01)   *C04B 28/00* (2006.01)
*B01J 2/30* (2006.01)   *C04B 28/02* (2006.01)
*C04B 28/04* (2006.01)   *C04B 28/06* (2006.01)
*C04B 28/08* (2006.01)   *C04B 28/10* (2006.01)
*C04B 28/14* (2006.01)   *C04B 28/18* (2006.01)

(52) Gemeinsame Patentklassifikation (CPC):
(C-Sets verfügbar)
**C09D 7/45; C04B 28/00; C04B 28/006;
C04B 28/02; C04B 28/04; C04B 28/06;
C04B 28/08; C04B 28/10; C04B 28/14;
C04B 28/18;** C04B 24/32; C04B 40/0042;
Y02P 40/10                                    (Forts.)

(86) Internationale Anmeldenummer:
**PCT/EP2019/070798**

(87) Internationale Veröffentlichungsnummer:
**WO 2020/035327 (20.02.2020 Gazette 2020/08)**

(54) **EFFIZIENTES NETZMITTEL DURCH TRÄGERUNG**

EFFICIENT WETTING AGENT THROUGH USE OF CARRIER STRUCTURES

AGENT MOUILLANT PAR LA MISE SUR SUPPORT EFFICACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2018 EP 18188791**

(43) Veröffentlichungstag der Anmeldung:
**23.06.2021 Patentblatt 2021/25**

(73) Patentinhaber: **BASF SE
67056 Ludwigshafen am Rhein (DE)**

(72) Erfinder:
• **FEICHTENSCHLAGER, Bernhard
83308 Trostberg (DE)**
• **PICHLER, Martin
83308 Trostberg (DE)**
• **SCHINABECK, Michael
83308 Trostberg (DE)**
• **NIEDERMAIR, Fabian
83308 Trostberg (DE)**
• **MÜLLER, Maria
83308 Trostberg (DE)**
• **HESSE, Christoph
83308 Trostberg (DE)**

(74) Vertreter: **BASF IP Association
BASF SE
GBI - Z078
67056 Ludwigshafen (DE)**

(56) Entgegenhaltungen:
EP-A1- 1 916 227       EP-A1- 2 397 518
EP-A1- 2 952 492       WO-A1-2013/134208
WO-A1-2016/146402      JP-A- 2012 197 209
US-A1- 2008 141 909

• DATABASE WPI Week 200445, Derwent World Patents Index; AN 2004-470654, XP002785886

(52) Gemeinsame Patentklassifikation (CPC): (Forts.)

C-Sets
**C04B 28/00, C04B 14/04, C04B 14/06, C04B 14/10,
C04B 14/26, C04B 22/10, C04B 22/16, C04B 24/32,
C04B 40/0042**

**Beschreibung**

**Technisches Gebiet**

Die vorliegende Erfindung betrifft Zusammensetzungen enthaltend ein mineralisches Bindemittel in trockener und nasser Form wie beispielsweise Mörtelzusammensetzungen, Betonzusammensetzungen, Putzzusammensetzungen, Estrichzusammensetzungen und ähnliche Zusammensetzungen. Insbesondere betrifft die vorliegende Erfindung Netzmittelmittelzusammensetzung, die in den vorgenannten Zusammensetzungen enthaltend ein mineralisches Bindemittel eingesetzt werden können.

**Hintergrund der Erfindung**

Netzmittel sind oberflächenaktive Substanzen, die die Verarbeitung von pulverförmigen Trockenmischungen, d.h. pulverförmige Mischungen umfassend ein mineralisches (d.h. hydraulisches oder nicht-hydraulisches) Bindemittel, insbesondere gipsbasierten und zementären Mörteln (Spachtelmassen etc.), erleichtern. In einer pulverförmigen Trockenmischung haben Netzmittel einerseits die Aufgabe, das Benetzen der pulverförmigen Trockenmischung in Wasser zu beschleunigen, um so in möglichst kurzer Zeit eine verarbeitungsbereite Bindemittelzusammensetzung, z.B. Frischmörtel, erhalten zu können. Zum anderen haben Netzmittel die Aufgabe, das Benetzen der pulverförmigen Trockenmischung bereits in einer möglichst geringen Wassermenge zu ermöglichen und so eine Mörtelzusammensetzung (Frischmörtel) zu ergeben, die gut verarbeitet werden kann und rasch und unter möglichst geringer Schwindung zu einer Kunststeinzusammensetzung abbindet und trocknet.

Während diese häufig gipsbasierten und zementären Trockenmischungen pulverförmig sind, sind Netzmittel oftmals flüssig oder wachsartig und schlecht als rieselfähiges Pulver zugänglich. In solchen häufig gipsbasierten und zementären pulverförmigen Trockenmischungen wird somit ein wachsförmiger Feststoff eingesetzt, der in der Formulierung durch langsame Auflösung schlecht verfügbar und zudem als Pulver wenig rieselfähig ist.

EP 2 006 258 B offenbart Dispergiermittel für Gipszusammensetzungen, die Kammpolymere enthalten.

WO 2014/114784 A1 offenbart ein Additiv für hydraulisch abbindende Massen, umfassend ein Dispergiermittel, zumindest eine nicht polymere Sulfonsäureverbindung und Calciumsilikathydratpartikel.

WO 2014/114782 A1 offenbart eine Härtungsbeschleunigerzusammensetzung auf Basis von Calciumsilikathydrat, insbesondere ein Verfahren zur Herstellung einer solchen Härtungsbeschleunigerzusammensetzung durch Umsetzen von einer Calciumquelle, die aus Calciumhydroxid und Calciumoxid ausgewählt ist, mit einer wasserlöslichen Silikatverbindung in Gegenwart wenigstens eines wasserlöslichen polymeren Dispersionsmittels, das anionische und/oder anionogene Gruppen und Polyether-Seitenketten umfasst.

WO 2015/185333 A1 beschreibt ein zementäres Bindemittel-System, das eine schnelle zeitliche Entfaltung der dispergierenden Wirkung des Fließmittels nach Zugabe von Anmachwasser und gleichzeitig eine schnelle Erhärtung des zementären Systems zeigt. Die Zusammensetzung umfasst 5-50 Gew.-% Calciumsilikat-Hydrat, 10-60 Gew.-% mindestens eines wasserlöslichen, säuregruppenhaltigen Polymers, das Polyethergruppen umfasst, und 5-40 Gew.-% mindestens eines Polyalkylenglycolethers.

EP 1 518 923 A1 beschreibt tensidhaltige Zusammensetzungen, die im Wesentlichen bestehen aus a) Fettalkoholalkoxylaten, b) amorpher Kieselsäure, c) Trägermaterial und d) gegebenenfalls üblichen Hilfsmitteln und die zum Einsatz in Wasch- und Reinigungsmitteln geeignet sind.

EP 2 952 492 bezieht sich auf eine Zusammensetzung, die Calciumsilikathydrat (CSH), mindestens ein wasserlösliches säuregruppenhaltiges Polymer umfassend Polyethergruppen und einen Polyalkylenglykolether umfasst sowie eine zementhaltige Mischung die diese Zusammensetzung enthält. Die Zusammensetzung ist geeignet zur Beschleunigung der Aktivität des mindestens einen wasserlöslichen, säuregruppenhaltigen Polyethergruppen enthaltenden Polymers als Dispergiermittel in Zementmischung nach Zugabe von Anmachwasser.

EP 2 397 518 bezieht sich auf redispergierbare Polymerpulver-Zusammensetzungen, hergestellt aus carboxyliertem Styrol-Butadien-Copolymerlatex und einem Polyglykol für Trockenmischungen zur Verwendung in Zementzusammensetzungen.

WO 2016/146402 betrifft ein Dispergiermittel in Pulverform, ein Verfahren zur Herstellung des Dispergiermittels und die Verwendung des Dispergiermittels in einer anorganischen Bindemittelzusammensetzung. Insbesondere wird ein Dispergiermittel offenbart, das aus einer wässrigen Suspension die (a) ein wasserlösliches Polymer mit Polyethergruppen und (b) eine anorganische Komponente, die mindestens ein Schichtsilikat mit einer Schichtladung von 0, 1 oder 2 enthält und Sprühtrocknen der Suspension hergestellt wird, so dass ein Feststoff erhalten wird.

EP 1 916 227 bezieht sich auf pulverförmige acetylenische Tensid-Zusammensetzungen und einen teilchenförmigen Träger, der auf seiner Oberfläche eine Verbindung mit Alkynylgruppe umfasst.

JP 2004 091288 bezieht sich auf ein Zementvormischung, welche ein pulverförmiges Dispergiermittel und ein pulverförmiges Antischaummittel enthält und geeignet ist, die Menge der eingeschlossenen Luft ausreichend zu kontrollieren. Das pulverförmige Dispergiermittel enthält ein wasserlösliches Copolymer aus vinylgruppen enthaltenden Monomeren, ausgewählt aus (Meth)acrylsäure, einem Salz oder Methylester davon. Das pulverförmige Antischaummittel enthält ein EO/PO-Blockcopolymer der Formel R1-O-A1-O-A2-OH, Kieselsäure und ein Antioxidationsmittel. In dieser Formel ist R1 eine $C_{12-22}$-Alkylgruppe, A1 ein Polyethylenglykol mit 2-15 EO-Wiederholungseinheiten und A2 ein Polypropylenglykol mit 10-70 PO wiederkehrenden Einheiten.

US 2008/141909 betrifft ein Verfahren zur Bereitstellung staubarmer Fugenmassen zur Verwendung im Bauwesen, insbesondere ein Verfahren zur effizienten Zugabe des Entstaubungsmittels zu dem Produkt. Der abbindende Füllstoff ist Calciumsulfat-Halbhydrat. Das Entstaubungsmittel wird als eine Komponente beschrieben, die bei Reibung erweicht oder schmilzt und kann eine Mischung aus synthetischen Wachsen wie Polyethylenglykol, Methoxy-Polyethylenglykol, Methoxypropylenglykol und Kombinationen davon sein.

WO 2013/134208 bezieht sich auf in Wasser redispergierbare Polymerpulver (RDPs), umfassend Acrylcopolymere mit Carboxylgruppen. Offenbart werden Copolymere, die in mindestens zwei Polymerisationsschritten hergestellt werden, in denen unterschiedliche Monomermischungen verwendet werden. Die Polymerisation erfolgt in einem wässrigen Medium, so dass eine Copolymerpartikel enthaltende Emulsion erhalten wird, wobei die erste Monomermischung ethylenisch ungesättigte Carbonsäure oder Anhydrid und ein oder mehrere nichtionische Monomere und die zweite Monomermischung ein oder mehrere nicht-ionische Monomere umfasst. Die Polymerpulver können durch Sprühtrocknung einer wässrigen Mischung des Copolymers, die gegebenenfalls auch ein Antibackmittel enthalten kann, hergestellt werden, wobei das Antibackmittel beispielsweise Calciumcarbonat, Talk, Dolomit oder ein Silikatmineral sein kann.

JP 2012 197209 schlägt einen Ausfällungsinhibitor für schwarze Partikel vor, um das Aussehens der Oberfläche eines ausgehärteten Materials aus vorgemischtem Zement zu verbessern, welcher unerwünschte schwarze Partikel auf der Oberfläche des ausgehärteten Materials umfasst. Der Ausfällungsinhibitor umfasst poröses Siliciumdioxid-Pulver mit einem durchschnittlichen Partikeldurchmesser von 1-15 μm und ein Polyoxyalkylen-Derivat.

Vor diesem Hintergrund liegt der vorliegenden Erfindung in einem ersten Aspekt die Aufgabe zugrunde, eine Netzmittelzusammensetzung bereitzustellen, die als rieselfähiges Pulver vorliegt, in der das Netzmittel so vorliegt, dass es sich beim Mischen der Zusammensetzung (beispielsweise als Bestandteil einer pulverförmigen Trockenmischung) mit Wasser rasch auflöst und somit verfügbar ist, um das Benetzen der Trockenmischung zu beschleunigen und das Benetzen der Trockenmischung in einer möglichst geringen Wassermenge zu ermöglichen.

In einem weiteren Aspekt liegt der vorliegenden Erfindung die Aufgabe zugrunde, eine pulverförmige Trockenmischung bereitzustellen, die diese Netzmittelzusammensetzung und ein mineralisches Bindemittel enthält, und somit beim Mischen mit Wasser rasch benetzbar ist, auch wenn eine geringe Wassermenge verwendet wird.

In einem dritten Aspekt liegt der vorliegenden Erfindung die Aufgabe zugrunde, eine Bindemittelzusammensetzung bereitzustellen, die durch Mischen der zuvor genannten pulverförmigen Trockenmischung (enthaltend die genannte Netzmittelzusammensetzung und ein mineralisches Bindemittel) mit Wasser erhalten wird.

## Kurzbeschreibung der Erfindung

Es wurde überraschenderweise gefunden, dass der erste Aspekt der Aufgabe der vorliegenden Erfindung durch die Bereitstellung einer Netzmittelzusammensetzung umfassend ein Netzmittel und einen pulverförmigen Träger gelöst werden kann.

Der zweite Aspekt der Aufgabe der vorliegenden Erfindung kann durch die Bereitstellung einer Trockenmischung umfassend die vorgenannte Netzmittelzusammensetzung und ein mineralisches Bindemittel gelöst werden.

Der dritte Aspekt der Aufgabe der vorliegenden Erfindung kann durch die Bereitstellung einer Nassmischung gelöst werden, die durch Mischen der vorgenannten Trockenmischung (enthaltend die genannte Netzmittelzusammensetzung und ein mineralisches Bindemittel) mit Wasser erhalten wird.

## Detaillierte Beschreibung der Erfindung

Nachfolgend wird die Erfindung durch Beschreibung allgemeiner und bevorzugter Ausführungsformen genauer beschrieben.

In einem ersten Aspekt der vorliegenden Erfindung wird eine Netzmittelzusammensetzung umfassend ein Netzmittel und einen pulverförmigen Träger gelöst bereitstellt. Die Komponenten dieser Netzmittelzusammensetzung werden nachfolgend beschrieben.

- Netzmittel

Mit dem Begriff "Netzmittel" wird im Rahmen der vorliegenden Anmeldung eine chemische Verbindung mit amphiphilen Eigenschaften bezeichnet, d.h. die Verbindung weist mindestens einen Bereich im Molekül auf, der hydrophile Eigenschaften aufweist, und mindestens einen Bereich im Molekül auf, der hydrophobe Eigenschaften aufweist. Je nach Charakter des hydrophilen Molekülteils unterscheidet man kationische Netzmittel, anionische Netzmittel und nicht-ionische Netzmittel. Kationische Netzmittel weisen als hydrophilen Molekülteil eine positiv geladene funktionelle Gruppe wie etwa eine quartäre Ammoniumgruppe ($-N^+R_3$) auf. Anionische Netzmittel weisen als hydrophilen Molekülteil eine negativ geladene funktionelle Gruppe wie etwa eine Carboxylatgruppe ($-COO^-$), Sulfonatgruppe ($-SO3^-$) oder Sulfatgruppe ($-OSO3^-$) auf. Nicht-ionische Netzmittel weisen als hydrophilen Molekülteil eine ungeladene, also neutrale, funktionelle Gruppe wie etwa eine Hydroxylgruppe (-OH) oder eine Ethergruppe, insbesondere ein Methylenoxygruppe ($-O-CH_2-$) oder eine Ethylenoxygruppe ($-O-CH_2CH_2-$) auf. Jede dieser funktionellen Gruppen kann im hydrophilen Molekülteil einfach oder auch mehrfach vorliegen. Beispielsweise kann eine Ethergruppe wie etwa eine Ethylenoxygruppe in Form einer Polyethergruppe vorliegen, in der beispielsweise 10 Ethylenoxygruppen linear aneinander gebunden sind.

Die Hydrophobie eines Molekülteils ist eine relative Eigenschaft, d.h. die Bewertung eines Molekülteils als hydrophob erfolgt unter Bezug auf den jeweils anderen, als hydrophil zu klassifizierenden Molekülteil. Bei kationischen und anionischen Netzmitteln ist die Unterscheidung von hydrophilem und hydrophobem Molekülteil vergleichsweise eindeutig, da der Molekülteil, der die kationisch bzw. anionisch geladene Gruppe enthält, als hydrophil zu klassifizieren ist. Bei nicht-ionischen Netzmitteln erfolgt die Unterscheidung in der Regel durch Vergleich der Hydrophobie der im Molekül enthaltenen Gruppen. So kann eine Polyethergruppe (etwa aus 10 aneinander gebundenen Ethylenoxygruppen) im Vergleich zu einer im gleichen Molekül vorhandenen Alkylgruppe als hydrophil klassifiziert werden. Es ist aber ebenfalls möglich, eine solche Polyethergruppe als hydrophob zu klassifizieren, etwa wenn im gleichen Molekül eine kationische oder anionische Gruppe, beispielsweise eine Carboxylatgruppe ($-COO^-$), oder wenn eine oder mehrere Hydroxylgruppen (-OH) vorliegen. Dies ist dem Fachmann bekannt.

Die erfindungsgemäße Zusammensetzung umfasst nicht-ionische Netzmittel, in denen ein Molekülteil durch Ethylenoxid-Oligomere gebildet wird. Ethylenoxid-Oligomere bestehen aus Struktureinheiten, die durch die folgende Formel dargestellt werden können, in der x einen Wert von 1 bis 100 annehmen kann.

$$-(CH_2CH_2O)_x-H$$

Der Einfachheit halber wird die von Ethylenoxid abgeleitete Struktureinheit ($-CH_2CH_2O-$) im Rahmen dieser Anmeldung auch durch die Abkürzung EO dargestellt. Ethylenoxid-Oligomere der Formel $-(CH_2CH_2O)_x-H$ können somit verkürzt auch durch $-EO_x-$ dargestellt werden. Diese Ethylenoxid-Oligomere sind linear, d.h. die sich wiederholenden Ethylenoxid-Struktureinheiten sind ohne Verzweigung der Molekülkette aneinander gebunden.

Wie erläutert, hängt die Klassifizierung der Molekülteile als hydrophil oder hydrophob von der Umgebung im Molekül ab. Eine Polyethergruppe kann als hydrophil oder hydrophob klassifiziert werden. In den im Rahmen der vorliegenden Erfindung bevorzugten nicht-ionischen Netzmitteln kann der durch Ethylenoxid-Oligomere gebildete Molekülteil als hydrophiler Molekülteil oder auch als hydrophober Molekülteil fungieren.

Folgende Klassen nicht-ionischer Netzmittel enthalten Ethylenoxid-Oligomere.

(1) Blockcopolymere aus Ethylenoxid-Oligomeren und Propylenoxid-Oligomeren

Dieser Typ nicht-ionischer Netzmittel besteht aus zwei terminalen Ethylenoxid-Oligomer-Blöcken und einem zentralen Propylenoxid-Oligomer-Block und wird auch als EO-PO-Blockcopolymer bezeichnet. Diese Blockcopolymere weisen die allgemeine Formel

$$HO(CH_2CH_2O)_x-(CH_2CH(CH_3)O)_y-(CH_2CH_2O)_zH \ ,$$

wobei gilt

$$1 \leq x \leq 100,$$

$$1 \leq y \leq 100,$$

$$1 \leq z \leq 100.$$

Somit stellt jeder der terminalen Ethylenoxid-Oligomer-Blöcke ein Ethylenoxid-Oligomer dar. Der Propylenoxid-Oligomer-Block ist als hydrophober Molekülteil, die Ethylenoxid-Oligomer-Blöcke als hydrophile Molekülteile anzusehen.

Der zentrale Propylenoxid-Oligomer-Block besteht aus Struktureinheiten, die durch die folgende Formel dargestellt werden können, in der y einen Wert von 1 bis 100 annehmen kann.

$$-(CH_2CH(CH_3)O)_y-$$

Der Einfachheit halber wird die von Propylenoxid abgeleitete Struktureinheit ($-CH_2CH(CH_3)O-$) im Rahmen dieser Anmeldung auch durch die Abkürzung PO dargestellt. Propylenoxid-Oligomere der Formel $-(CH_2CH(CH_3)O)_y-$ können somit verkürzt auch durch $-PO_y-$ dargestellt werden. Diese Propylenoxid-Oligomere sind linear, d.h. die sich wiederholenden Propylenoxid-Struktureinheiten sind ohne Verzweigung der Molekülkette aneinander gebunden. Die in der Struktureinheit enthaltene Methylgruppe wird somit nicht als Verzweigung des Propylenoxid-Oligomers angesehen.

Bevorzugt sind EO-PO-Blockcopolymere der allgemeinen Formel

$$HO(CH_2CH_2O)_x\text{-}(CH_2CH(CH_3)O)_y\text{-}(CH_2CH_2O)_zH \;,$$

ist, wobei gilt

$$1 \le x \le 100,$$

$$1 \le y \le 100,$$

$$1 \le z \le 100,$$

und

$$5\;\% \le (44x + 44z) \,/\, (44x + 58y + 44z) \le 90\;\%.$$

Weiter bevorzugt sind EO-PO-Blockcopolymere der allgemeinen Formel

$$HO(CH_2CH_2O)_x\text{-}(CH_2CH(CH_3)O)_y\text{-}(CH_2CH_2O)_zH \;,$$

ist, wobei gilt

$$1 \le x \le 100,$$

$$1 \le y \le 100,$$

$$1 \le z \le 100,$$

und

$$10\;\% \le (44x + 44z) \,/\, (44x + 58y + 44z) \le 80\;\%.$$

Der Massenanteil der Ethylenoxid-Oligomer-Blöcke (ausgedrückt als $44x + 44z$) bezogen auf die Gesamtmolekülmasse (ausgedrückt als $44x + 58y + 44z$) kann somit 5 % oder mehr und 90 % oder weniger betragen.

Noch weiter bevorzugt sind EO-PO-Blockcopolymere der allgemeinen Formel

$$HO(CH_2CH_2O)_x\text{-}(CH_2CH(CH_3)O)_y\text{-}(CH_2CH_2O)_zH \;,$$

wobei gilt

$$1 \le x \le 90,$$

$$13 \le y \le 70,$$

$$1 \le z \le 90,$$

$$10\ \% \leq (44x + 44z) / (44x + 58y + 44z) \leq 80\ \%.$$

In diesen EO-PO-Blockcopolymeren weist der zentrale Propylenoxid-Oligomer-Block somit eine Masse im Bereich von 754 bis 4060 g/mol auf.

Der Massenanteil der Ethylenoxid-Oligomer-Blöcke (ausgedrückt als $44x + 44z$) bezogen auf die Gesamtmolekülmasse (ausgedrückt als $44x + 58y + 44z$) kann somit 10 % oder mehr und 80 % oder weniger betragen. Diese Beziehung wird beispielsweise erfüllt, wenn x, y und z die folgenden Werte annehmen.

(a)

$$x = z = 1 \text{ und } z = 13$$

(b)

$$x = z = 90 \text{ und } z = 35$$

(c)

$$x = 5, z = 6 \text{ und } z = 70$$

(d)

$$x = 1, z = 2 \text{ und } z = 15$$

(e)

$$x = 20, z = 21 \text{ und } z = 47$$

(f)

$$x = z = 2 \text{ und } z = 56$$

(g)

$$x = z = 36 \text{ und } z = 56$$

Insbesondere bevorzugt sind EO-PO-Blockcopolymer der allgemeinen Formel

$$HO(CH_2CH_2O)_x\text{-}(CH_2CH(CH_3)O)_y\text{-}(CH_2CH_2O)_zH \ ,$$

wobei gilt

$$10 \leq x \leq 90,$$

$$25 \leq y \leq 60,$$

$$10 \leq z \leq 90,$$

$$10\ \% \leq (44x + 44z) / (44x + 58y + 44z) \leq 80\ \%.$$

In diesen EO-PO-Blockcopolymeren weist der zentrale Propylenoxid-Oligomer-Block somit eine Masse im Bereich von 1450 bis 3480 g/mol auf.

Der Massenanteil der Ethylenoxid-Oligomer-Blöcke (ausgedrückt als $44x + 44z$) bezogen auf die Gesamtmolekülmasse (ausgedrückt als $44x + 58y + 44z$) ist 10 % oder mehr und 80 % oder weniger. Diese Beziehung wird beispielsweise erfüllt, wenn x, y und z die folgenden Werte annehmen.

(a)

$$x = z = 10 \text{ und } z = 60$$

(b)

$$x = z = 90 \text{ und } z = 35$$

(c)

$$x = 5, z = 5 \text{ und } z = 25$$

(d)

$$x = z = 45 \text{ und } z = 60$$

(e)

$$x = 20, z = 21 \text{ und } z = 47$$

Am meisten bevorzugt sind EO-PO-Blockcopolymer der allgemeinen Formel

$$HO(CH_2CH_2O)_x\text{-}(CH_2CH(CH_3)O)_y\text{-}(CH_2CH_2O)_zH \ ,$$

wobei gilt

$$10 \leq x \leq 90,$$

$$35 \leq y \leq 50,$$

$$10 \leq z \leq 90,$$

$$10 \ \% \leq (44x + 44z) \ / \ (44x + 58y + 44z) \leq 80 \ \%.$$

In diesen EO-PO-Blockcopolymeren weist der zentrale Propylenoxid-Oligomer-Block somit eine Masse im Bereich von 2030 bis 2900 g/mol auf.

Der Massenanteil der Ethylenoxid-Oligomer-Blöcke (ausgedrückt als 44x + 44z) bezogen auf die Gesamtmolekülmasse (ausgedrückt als 44x + 58y + 44z) ist 10 % oder mehr und 80 % oder weniger. Diese Beziehung wird beispielsweise erfüllt, wenn x, y und z die folgenden Werte annehmen.

(a)

$$x = z = 10 \text{ und } z = 50$$

(b)

$$x = z = 90 \text{ und } z = 35$$

(c)

$$x = 5, z = 5 \text{ und } z = 35$$

(d)

$$x = z = 45 \text{ und } z = 60$$

(e)

$$x = 20, z = 21 \text{ und } z = 47$$

Solche Blockcopolymere aus Ethylenoxid-Oligomeren und Propylenoxid-Oligomeren sind kommerziell erhältlich, beispielsweise unter der Handelsbezeichnung "Pluronic® PE" von BASF SE.

(2) Fettalkoholalkoxylate

Dieser Typ nicht-ionischer Netzmittel besteht aus einem Ethylenoxid-Oligomer als Molekülteil und einem Alkoxygruppe als anderem Molekülteil. Diese Fettalkoholalkoxylate weisen die allgemeine Formel

$$RO(CH_2CH_2O)_x\text{-}(CH_2CH(CH_3)O)_y\text{-}H \ ,$$

wobei gilt

$$2 \leq x \leq 80,$$

y = 0
R = $C_{16-18}$-Alkyl oder $C_{16-18}$-Alkenyl mit 1, 2 oder 3 Doppelbindungen.

Besonders bevorzugt sind dabei Fettalkoholalkoxylate der genannten allgemeinen Formel, wobei gilt $30 \leq x \leq 80$,

y = 0
R = $C_{16-18}$-Alkyl oder $C_{16-18}$-Alkenyl mit 1, 2 oder 3 Doppelbindungen.

Solche Fettalkoholalkoxylate sind kommerziell erhältlich, beispielsweise unter den Handelsbezeichnungen "Lutensol® AT", "Dehypon®" wie etwa "Dehypon® LS 54" und "Disponil® A" von BASF SE.

- Träger

Der Träger ist ein pulverförmiges Material, auf dessen Oberfläche das Netzmittel unter Bildung der Netzmittelzusammensetzung gemäß der vorliegenden Erfindung aufgebracht wird.

Der Träger ist hinsichtlich der Korngröße und des Materials nicht sonderlich beschränkt, d.h. Korngröße und Material können unabhängig voneinander gewählt werden, wobei der Träger unter den Bedingungen der Herstellung, Lagerung und Verwendung der Netzmittelzusammensetzung als Bestandteil einer Trockenmischung oder Nassmischung stabil sein sollte und der Träger gegenüber dem Netzmittel ausreichend inert sein sollte, um eine Zersetzung des Netzmittels oder eine Verschlechterung der Eigenschaften des Netzmittels zu vermeiden. Zudem sollte der Trägerstoff auch die Eigenschaften der Trockenmischung gemäß einem weiteren Aspekt der vorliegenden Erfindung und der Nassmischung gemäß einem weiteren Aspekt der vorliegenden Erfindung nicht verschlechtern.

Der Träger kann in der Regel eine Korngröße von 5-500 μm aufweisen wobei der Begriff "Korngröße" in Bezug auf den Träger im Rahmen der vorliegenden Anmeldung die gleiche Bedeutung hat, wie der Begriff "Korngröße" in Bezug auf das mineralische Bindemittel, das ein Bestandteil der Trockenmischung ist, und kann nach dem gleichen Verfahren bestimmt werden. Die Korngröße des Trägers kann beispielsweise so gewählt werden, dass sie der Korngröße des mineralischen Bindemittels ähnlich ist, d.h. der d50-Wert des Trägers ist nicht kleiner als 80 % des d50 des mineralischen Bindemittels und nicht größer als 120 % des d50 des mineralischen Bindemittels. Die Wahl eines Trägers mit einer geringen Korngröße führt in der Regel zu einem günstigen Fließverhalten der Netzmittelzusammensetzung und der Trockenmischung, kann jedoch aufgrund der höheren Anteile von Teilchen mit einer besonders geringen Korngröße zu einem in der Regel nicht wünschenswerten höheren Feinstaubanteil der Netzmittelzusammensetzung und der Trockenmischung führen. Umgekehrt kann der Feinstaubanteil der Netzmittelzusammensetzung und der Trockenmischung in vorteilhafter Weise gering gehalten werden, indem ein Träger mit einer hohen Korngröße gewählt wird, jedoch kann dadurch das Fließverhalten der Netzmittelzusammensetzung und der Trockenmischung negativ beeinflusst werden.

Da das Netzmittel auf die Oberfläche des Trägerstoffs vorliegen soll, ist es vorteilhaft, dass der Träger eine hohe Oberfläche pro Gewichtseinheit, d.h. eine hohe spezifische Oberfläche, aufweist. Beispielsweise können Trägerstoffe mit einer spezifischen Oberfläche von mehr als 10 m²/g, mehr als 20 m²/g, mehr als 30 m²/g oder auch mehr als 40 m²/g verwendet werden. Die spezifische Oberfläche kann nach dem Fachmann bekannten Verfahren bestimmt werden, etwa durch eine BET-Methode unter Verwendung von Stickstoff.

In bevorzugten Ausführungsformen ist der Träger ein anorganisches Material. Beispielsweise kann der Träger in weiter bevorzugten Ausführungsformen aus Siliciumdioxid, Silikaten und Alumosilikaten, Erdalkalicarbonaten, Erdalkaliphosphaten, pulverförmige amorphe Gesteinsschmelzen und Mischungen davon ausgewählt werden.

In noch weiter bevorzugten Ausführungsformen kann der Träger aus Erdalkalicarbonaten, Erdalkaliphosphaten, Erdalkalisilikaten, Erdalkalisilikathydraten und Mischungen davon, bevorzugt aus Magnesiumcarbonat, Calciumcarbonat, Magnesiumphosphat, Calciumphosphat, Magnesiumsilikat, Calciumsilikat, Magnesiumsilikathydrat, Calciumsilikathydrat und Mischungen davon, insbesondere aus Magnesiumsilikathydrat, Calciumsilikathydrat und Mischungen davon ausgewählt werden.

In ebenfalls noch weiter bevorzugten Ausführungsformen kann der Träger aus Schichtsilikaten und Schichtalumosilikaten und Mischungen davon, insbesondere Bentonit, Kaolin, Montmorillonit und Mischungen davon, natürlichem Siliziumdioxid, wie etwa Kieselgur, amorphem Siliziumdioxid, pyrolytischem Siliziumdioxid, gefälltem Siliziumdioxid und Mischungen davon ausgewählt werden.

In besonders bevorzugten Ausführungsformen umfasst der Träger Calciumsilikathydrat, insbesondere mit einer spezifischen Oberfläche von 1 bis 200 $m^2/g$, besonders bevorzugt 30-150 $m^2/g$, bestimmt nach der BET-Methode mittels Stickstoffsorption.

In weiteren besonders bevorzugten Ausführungsformen besteht der Träger aus Calciumsilikathydrat insbesondere mit einer spezifischen Oberfläche von 1 bis 200 $m^2/g$, besonders bevorzug 30-150 $m^2/g$, bestimmt nach der BET-Methode mittels Stickstoffsorption.

Die Zusammensetzung von Calciumsilikathydrat kann allgemein durch die folgende Summenformel beschrieben werden:

$$a\ CaO,\ SiO_2,\ b\ Al_2O_3,\ c\ H_2O,\ d\ X,\ e\ W$$

wobei gilt:

X ist ein Alkalimetall,
W ist ein Erdalkalimetall,
$0,1 \leq a \leq 2$, vorzugsweise $0,66 \leq a \leq 1,8$,
$0 \leq b \leq 1$, vorzugsweise $0 \leq b \leq 0,1$,
$1 \leq c \leq 6$, vorzugsweise $1 \leq c \leq 6,0$,
$0 \leq d \leq 1$, vorzugsweise $0 \leq d \leq 0,4$,
$0 \leq e \leq 2$, vorzugsweise $0 \leq e \leq 0,1$.

Vorzugsweise liegt das Calciumsilikathydrat zumindest teilweise in einer oder mehrerer der folgenden Kristallstrukturen vor: Foshagit, Hillebrandit, Xonotlit, Nekoit, Clinotobermorit, 9Ä-Tobermorit (Riversiderit), 11Ä-Tobermorit, 14Ä-Tobermorit (Plombierit), Jennit, Metajennit, Calcium Chondrodit, Afwillit, $\alpha$ -Ca$_2$[Si0$_3$(OH)](OH), Dellait, Jaffeit, Rosenhahnit, Killalait und/oder Suolunit vor, besonders bevorzugt als Xonotlit, 9Ä-Tobermorit (Riversiderit), 11Ä-Tobermorit, 14Ä- Tobermorit (Plombierit), Jennit, Metajennit, Afwillit und/oder Jaffeit. In einer weiterhin bevorzugten Ausführungsform liegt das CalciumsilikatHydrat in amorpher Form vor. Bevorzugt beträgt das molare Verhältnis von Calcium zu Silicium im Calciumsilikathydrat von 0,6 bis 2, bevorzugt 0,8 bis 1,8, besonders bevorzugt 0,9 bis 1,6, insbesondere bevorzugt 1,0 bis 1,5. Das molare Verhältnis von Calcium zu Wasser im Calciumsilikat-Hydrat beträgt vorzugsweise 0,6 bis 6, besonders bevorzugt 0,6 bis 2 und insbesondere bevorzugt 0,8 bis 2.

Bezüglich der Herstellung von Calciumsilikathydrats, das als Trägerstoff zur Verwendung in der vorliegenden Erfindung geeignet ist, wird auch auf die Patentanmeldungen WO 2015/185333A1, WO 2014/114784 A1, WO 2014/114782 A1, WO 2010/026155 A1, WO 2011/026720 A1 und WO 2011/029711 Bezug genommen, deren Inhalt hiermit vollständig in die Anmeldung aufgenommen wird.

Calciumsilikathydrat ist in verschiedener Korngrößen und mit verschiedenen spezifischen Oberflächen auch kommerziell erhältlich. Im Rahmen der vorliegenden Erfindung als Träger verwendbare Calciumsilikathydrat-Typen sind beispielsweise unter der Bezeichnung Circosil® von Cirkel GmbH & Co.KG, Haltern am See, Deutschland, erhältlich.

- Netzmittelzusammensetzung

Die Netzmittelmittelzusammensetzung gemäß der vorliegenden Erfindung umfasst (i) ein Netzmittel, worin das Netzmittel mindestens ein nicht-ionisch Netzmittel ist, ausgewählt aus

(ii) ein Blockcopolymer aus Ethylenoxid und Propylenoxid der Formel

$$HO(CH_2CH_2O)_x\text{-}(CH_2CH(CH_3)O)_y\text{-}(CH_2CH_2O)_zH$$

ist, wobei gilt

$$1 \leq x \leq 100,$$

$$1 \leq y \leq 100,$$

$$1 \leq z \leq 100;$$

(iii) ein Fettalkoholalkoxylat der Formel

$$RO(CH_2CH_2O)_x\text{-}(CH_2CH(CH_3)O)_y\text{-}H$$

ist, wobei gilt

$$2 \leq x \leq 80,$$

$y = 0,$
$R = C_{8\text{-}18}$-Alkyl oder $C_{8\text{-}18}$-Alkenyl mit 1, 2 oder 3 Doppelbindungen; oder

(iv) eine Kombination davon ist,

und (ii) einen pulverförmigen Träger, und die Netzmittelmittelzusammensetzung kein anionisches Netzmittel enthält.

Diese Komponenten sind vorstehend allgemein und unter Berücksichtigung bevorzugter Ausführungsformen beschrieben worden.

Wenngleich dies nicht wissenschaftlich bewiesen ist, so kann vermutet werden, dass das Netzmittel in fein verteilter Form auf der Oberfläche des Trägers angeordnet ist, und aufgrund dieser fein verteilten Form besonders rasch in eine wässrige Phase übergehen kann, so dass das Netzmittel beim Herstellen der Nassmischung gemäß einem weiteren Aspekt der vorliegenden Erfindung durch Mischen von Wasser mit der Trockenmischung gemäß einem weiteren Aspekt der vorliegenden Erfindung schnell in der wässrigen Phase verfügbar ist. Auf diese Weise können die gewünschten Eigenschaften des Netzmittels wirksam werden und eine zügige Benetzung der Bestandteile der Trockenmischung bewirken.

In der Netzmittelzusammensetzung ist das Mengenverhältnis von Netzmittel und Träger nicht sonderlich beschränkt, jedoch ist es wünschenswert, die Beladung des Trägers mit Netzmittel so niedrig zu halten, dass die Oberfläche des Trägers nicht vollständig mit Netzmittel bedeckt ist, da dies in unerwünscht hohem Ausmaß zu Agglomeration und Verkleben der mit Netzmittel beladenen Teilchen des Trägers führen würde. Insbesondere wäre das Netzmittel in diesem Fall auch nicht mehr in fein verteilter Form auf der Oberfläche des Trägers angeordnet, so dass der gewünschte rasche Übergang in eine wässrige Phase nicht mehr gewährleistet wäre.

Um den Träger möglichst effizient einzusetzen, ist jedoch andererseits generell eine hohe Beladung des Trägers wünschenswert. Eine Annäherung an eine optimale Verknüpfung dieser Effekte kann in der Regel erreicht werden, wenn das Netzmittel in der Netzmittelmittelzusammensetzung in einer Menge von 1-50 Gew-%, bevorzugt 10-40 Gew.-%, besonders bevorzugt 20-35 Gew.-% bezogen auf das Gewicht des Trägers vorliegt.

Eine Netzmittelmittelzusammensetzung, die das Netzmittel in dieser Menge enthält, hat zudem den Vorteil, auch bei erhöhten Temperaturen (beispielsweise etwa bis 70 ° C) lagerstabil zu sein, selbst wenn das Netzmittel einen Schmelzpunkt von ca. 30 ° C aufweist. Das bedeutet insbesondere, dass kein unerwünschtes Verklumpen der Netzmittelmittelzusammensetzung, kein Verkleben oder Anhaften der Netzmittelmittelzusammensetzung mit dem zur Lagerung verwendeten Gebinde und kein Ausölen, d.h. Austreten des Netzmittels aus der Netzmittelmittelzusammensetzung, auf.

Sofern es erforderlich ist, das Mengenverhältnis von Netzmittel und Träger weiter zu optimieren, kann der Fachmann anhand der Lehre in der vorliegenden Anmeldung einfache Versuche planen und durchführen. Beispielsweise kann der Fachmann die Benetzungszeit einer Netzmittelmittelzusammensetzung enthaltend ein bestimmtes Netzmittel und einen bestimmten Träger für verschiedene Mengenverhältnisse von Netzmittel und Träger bestimmen, wie dies in den Beispielen der vorliegenden Anmeldung beschrieben ist, um das Mengenverhältnis von Netzmittel und Träger zu ermitteln, mit dem eine möglichst kurze Benetzungszeit erreicht werden kann.

In bevorzugten Ausführungsformen der Netzmittelmittelzusammensetzung ist der Träger ein anorganisches Material, wobei der Träger in weiter bevorzugten Ausführungsformen ausgewählt ist aus Siliciumdioxid, Silikaten und Alumosilikaten, Erdalkalicarbonaten, Erdalkaliphosphaten, pulverförmigen amorphen Gesteinsschmelzen, Erdalkalisilikaten, Erdalkalisilikathydraten und Mischungen davon, die vorstehend allgemein und unter Berücksichtigung bevorzugter Ausführungsformen beschrieben worden sind.

In all diesen Ausführungsformen der Netzmittelmittelzusammensetzung liegt das Netzmittel in der Regel in einer Menge von 1-50 Gew-%, bevorzugt 10-40 Gew.-%, besonders bevorzugt 20-35 Gew.-% bezogen auf das Gewicht des Trägers vor.

Die Netzmittelzusammensetzung kann weitere Komponenten umfassen, beispielsweise Rieselhilfsmittel wie etwa Calciumcarbonat oder pyrogenes Siliziumdioxid, das unter den Handelsbezeichungen Sipernat® und Aerosil® (Evonik Industries AG, Essen, Germany) kommerziell erhältlich ist. Diese weiteren Komponenten können in der Regel in einer Menge von 1-5 Gew.-%, bevorzugt 1-3 Gew.-% bezogen auf das Gewicht der Netzmittelmittelzusammensetzung vorliegen.

- <u>Herstellung der Netzmittelzusammensetzung</u>

Die Netzmittelzusammensetzung kann mittels eines beliebigen Verfahren, das zum Aufbringen des Netzmittels auf die Oberfläche des Trägers geeignet ist, hergestellt werden.

Beispielsweise ist es möglich, das Netzmittel in geeigneter Form unter Mischen des pulverförmigen Trägers auf den Träger aufzubringen. Sofern das Netzmittel bei Raumtemperatur flüssig ist, kann das Netzmittel bei Raumtemperatur auf den Träger aufgesprüht werden, wobei der Träger vorzugsweise gemischt wird, um eine gleichmäßige Beladung mit dem Netzmittel zu erreichen. Sofern das Netzmittel bei Raumtemperatur fest ist, ist es denkbar, das Netzmittel durch Erwärmen in flüssige Form zu überführen und auf den Träger aufzusprühen.

Es ist ebenfalls denkbar das Netzmittel in einem geeigneten Lösungsmittel zu dispergieren oder zu lösen, wobei gegebenenfalls ebenfalls erwärmt werden kann, und die so erhaltene Dispersion oder Lösung auf den Träger aufzusprühen. Als Lösungsmittel können beispielsweise Wasser ein- und zweiwertige Alkohole wie etwa Ethanol, Propanol, isoPropanol, Butanol, deren Etherderivate wie etwa Butylglycol (d.h. Ethylenglycolmonobutylether) und Esterderivate mit Carbonsäuren wie etwa Ethylacetat oder Butylglycolacetat (d.h. (2-Butoxyethyl)acetat), und Mischungen dieser Lösungsmittel verwendet werden. In diesem Fall ist es anschließend erforderlich, das Lösungsmittel aus der Mischung von Träger und Netzmittel zu entfernen. Unter diesem Gesichtspunkt kann es vorteilhaft sein, eine Mischung von mindestens zwei Lösungsmitteln zu verwenden, die ein relativ niedrigsiedendes Azeotrop bilden. Das Entfernen des Lösungsmittels bzw. der Lösungsmittelmischung kann durch Verdampfen unter vermindertem Druck und/oder erhöhter Temperatur erfolgen. Falls Lösungsmittel in einer Menge verwendet wird, die ausreichend ist, um eine sprühfähige Suspension oder Dispersion von Träger und Netzmittel in dem Lösungsmittel zu erzeugen, kann das Lösungsmittel beispielsweise auch durch Sprühtrocknen entfernt werden. Falls die Mischung von Lösungsmittel, Träger und Netzmittel nicht sprühfähig, aber ausreichend fließfähig ist, kann Walzentrocknung oder Bandtrocknung verwendet werden. Gegebenenfalls kann die getrocknete Mischung von Netzmittel und Träger nachbehandelt werden, beispielsweise um Agglomerate unter mit dem Netzmittel beschichteten Trägerteilchen aufzubrechen, so dass in der fertiggestellten Netzmittelzusammensetzung keine agglomerierten Trägerteilchen vorliegen, sondern die Korngröße der Netzmittelzusammensetzung im Wesentlichen der Korngröße des (unbeschichteten) Trägers entspricht.

- <u>Trockenmischung</u>

In einem weiteren Aspekt der vorliegenden Erfindung wird eine Trockenmischung bereitgestellt, umfassend die vorgenannte Netzmittelzusammensetzung und ein mineralisches Bindemittel.

Mit dem Begriff "Trockenmischung" wird im Rahmen der vorliegenden Anmeldung eine pulverförmige Zusammensetzung bezeichnet, die die vorgenannte Netzmittelzusammensetzung und wenigstens ein mineralisches Bindemittel sowie als optionale Bestandteile Zuschlagstoffe und/oder Adjuvantien umfasst. Die Trockenmischung sich unterscheidet in ihrer Zusammensetzung abgesehen von dem Vorliegen der Netzmittelmittelzusammensetzung nicht von herkömmlichen und dem Fachmann bekannten Trockenmischungen.

Die Korngröße der Zuschlagstoffe ist nicht sonderlich beschränkt. Sofern die Zuschlagstoffe eine solche Korngröße aufweisen, dass sie ein Sieb mit einer Maschenweite von 4 mm passieren, wird die Trockenmischung auch als Trockenmörtel bezeichnet. Sofern die Zuschlagstoffe eine solche Korngröße aufweisen, dass sie ein Sieb mit einer Maschenweite von 4 mm nicht passieren, wird die Trockenmischung auch als Trockenbeton bezeichnet.

Ein Zuschlagstoff kann ausgewählt sein aus Sedimenten und Gesteinskörnungen wie etwa ungebrochener Sand, ungebrochener Kies und gebrochene Gesteinskörnungen wie etwa Schotter, Splitte, Brechsande und Felsgesteine.

Mit Brechsand werden üblicherweise kantige, gebrochene Mineralstoffe mit einer Korngröße zwischen 0 und 2 Millimeter bezeichnet. Mit Split werden üblicherweise kantige, gebrochene Mineralstoffe mit einer Korngröße zwischen 2 und 32 Millimeter bezeichnet. Mit Schotter werden üblicherweise kantige, gebrochene Mineralstoffe mit einer Korngröße zwischen 32 und 63 Millimeter bezeichnet. Mit Sand wird üblicherweise Sediment aus Mineralkörnern mit einer Korngröße zwischen 0,063 und 2 Millimeter bezeichnet. Mit Kies wird üblicherweise Sediment aus Mineralkörnern mit einer Korngröße zwischen 2 und 63 Millimeter bezeichnet.

Als in der Trockenmischung vorliegende Adjuvantien können insbesondere Pigmente, Farbstoffe, Rheologiemodifizierer (Verdicker, Verflüssiger), Hydratationsmodifizierer (Retarder, Beschleuniger), Fließmittel, Entschäumer, und Luftporenbildner genannt werden. Diese Adjuvantien unterscheiden sich in Art und Menge nicht von den Adjuvantien, die in herkömmlichen und dem Fachmann bekannten Trockenmischungen üblicherweise enthalten sind.

Die erfindungsgemäße Trockenmischung enthält die Netzmittelmittelzusammensetzung gemäß der vorliegenden Erfindung in der Regel in einer solchen Menge, dass das in Netzmittelmittelzusammensetzung enthaltene Netzmittel in einer Menge von 0,01-1 Gew.-% bezogen auf das Gewicht der Bestandteile der Trockenmischung, d.h. des mineralischen Bindemittels sowie der genannten optionalen Bestandteile (Zuschlagstoffe und/oder Adjuvantien), vorliegt.

In bevorzugten Ausführungsformen enthält die Trockenmischung die Netzmittelmittelzusammensetzung in einer solchen Menge, dass das in Netzmittelmittelzusammensetzung enthaltene Netzmittel in einer Menge von 0,03-0,5 Gew.-% bezogen auf das Gewicht der Bestandteile der Trockenmischung vorliegt.

In weiter bevorzugten Ausführungsformen enthält die Trockenmischung die Netzmittelmittelzusammensetzung in einer solchen Menge, dass das in Netzmittelmittelzusammensetzung enthaltene Netzmittel in einer Menge von 0,05-0,3 Gew.-% bezogen auf das Gewicht der Bestandteile der Trockenmischung vorliegt.

In noch weiter bevorzugten Ausführungsformen enthält die Trockenmischung die Netzmittelmittelzusammensetzung in einer solchen Menge, dass das in Netzmittelmittelzusammensetzung enthaltene Netzmittel in einer Menge von 0,1-0,2 Gew.-% bezogen auf das Gewicht der Bestandteile der Trockenmischung vorliegt.

- Mineralisches Bindemittel

Das mineralische Bindemittel ist ausgewählt aus hydraulischen Bindemitteln und nicht-hydraulischen Bindemitteln und kann ein einzelnes hydraulisches Bindemittel, ein einzelnes nicht-hydraulisches Bindemittel, eine Kombination mehrerer hydraulischer Bindemittel, eine Kombination mehrerer nicht-hydraulischer Bindemittel oder eine Kombination eines oder mehrerer hydraulischer Bindemittel und eines oder mehrerer nicht-hydraulischer Bindemittel sein.

Die Begriffe "hydraulisches Bindemittel" und "nicht-hydraulisches Bindemittel" sind dem Fachmann bekannt.

Im Rahmen der vorliegenden Anmeldung bezeichnet der Begriff "hydraulisches Bindemittel" ein mineralisches Bindemittel, das sowohl an der Luft als auch unter Wasser härtet, nämlich insbesondere durch chemische Reaktion mit Wasser (auch als Hydratation bezeichnet), und danach fest bleibt.

Im Rahmen der vorliegenden Anmeldung bezeichnet der Begriff "nicht-hydraulisches Bindemittel" ein mineralisches Bindemittel, das ausschließlich an der Luft härtet, beispielsweise durch Aufnahme von Luftbestandteilen wie etwa Wasser oder Kohlendioxid aus der Luft oder durch Trocknen, also Abgabe von Wasser an die Umgebungsluft.

Als Beispiele für im Rahmen der vorliegenden Erfindung einsetzbare hydraulische Bindemittel können Gips, Geopolymere, Zement, insbesondere Portlandzemente oder Tonerdeschmelzzemente und deren Mischungen mit Flugasche, Silica fume, Schlacke, Hüttensand und Kalksteinmehl oder gebranntem Kalk, Calciumsulfoaluminat, latent hydraulische Bindemittel wie etwa Puzzolane in Kombination mit Löschkalk, Branntkalk oder Zement genannt werden.

Mit dem Begriff "Gips" wird im Rahmen der vorliegenden Anmeldung jede bekannte Form von Gips, insbesondere Calciumsulfat-Dihydrat, Calciumsulfat-$\alpha$-Halbhydrat, Calciumsulfat-$\beta$-Halbhydrat oder Calciumsulfat-Anhydrit bezeichnet.

Als Beispiele für im Rahmen der vorliegenden Erfindung einsetzbare nicht-hydraulische Bindemittel können Kalk, d.h. in der Regel Löschkalk ($Ca(OH)_2$; auch als gelöschter Kalk bezeichnet), aber auch Branntkalk ($CaO$; auch als gebrannter Kalk bezeichnet), kalziniertes Magnesiumcarbonat ($MgO$; kaustisch gebrannter Magnesit) und Lehm genannt werden. Löschkalk härtet durch Aufnahme von Kohlendioxid ($CO_2$) aus der Luft unter Bildung von Calciumcarbonat und Freisetzung von Wasser. Branntkalk kann durch Umsetzen mit Wasser in Löschkalk überführt werden.

Das mineralische Bindemittel hat typischerweise eine Korngröße von 5-500 $\mu$m, im Rahmen der vorliegenden Anmeldung ist die Korngröße jedoch nicht besonders beschränkt. Der Begriff Korngröße im Sinne der vorliegenden Anmeldung entspricht dem Median der Korngrößen-Massenverteilung (d50), die durch Laserbeugung ermittelt werden kann, beispielsweise unter Verwendung eines Geräts vom Typ CILAS 1064.

- Nassmischung

In einem weiteren Aspekt der vorliegenden Erfindung wird eine Nassmischung bereitgestellt, die durch Mischen der vorgenannten Trockenmischung mit Wasser erhältlich ist.

Die Netzmittelmittelzusammensetzung gemäß der vorliegenden Erfindung beschleunigt die Benetzung der Trockenmischung und kann das Anmischen mit einer geringeren Wassermenge ermöglichen. Grundsätzlich erfolgt das Herstellen der Nassmischung aus der Trockenmischung jedoch gemäß dem Fachmann bekannten Verfahren, die üblicherweise zur Herstellung von Beton, Mörtel, Putz usw. verwendet werden. So ist dem Fachmann insbesondere die Wassermenge bekannt, die zum Herstellen der Nassmischung mit der Trockenmischung zu mischen ist.

Üblicherweise erfolgt die Herstellung der Nassmischung durch Mischen der Trockenmischung mit Wasser in einer Menge von mindestens 20 Gew.-% bezogen auf das in der Trockenmischung enthaltene mineralische Bindemittel, beispielsweise können 20-150 Gew.-% Wasser bezogen auf das in der Trockenmischung enthaltene mineralische Bindemittel verwendet werden. In weiteren Ausführungsformen kann das Mischen mit Wasser in einer Menge beispielsweise von 20-100 Gew.-%, bevorzugt 20-60 Gew.-%, weiter bevorzugt 25-55 Gew.-%, noch weiter bevorzugt 30-50 Gew.-%, insbesondere 35-45 Gew.-%, jeweils bezogen auf das in der Trockenmischung enthaltene mineralische Bindemittel, erfolgen.

**Beispiele**

Beispiel 1: Herstellung einer Netzmittelzusammensetzung

Als Netzmittel wird ein Blockcopolymer der Bezeichnung "Pluronic® PE 9400" (BASF SE, Ludwigshafen, Deutschland) verwendet.

Dieses Blockcopolymer weist die allgemeine Formel

$$HO(CH_2CH_2O)_x\text{-}(CH_2CH(CH_3)O)_y\text{-}(CH_2CH_2O)_zH$$

auf und besteht aus einem zentralen Block sich wiederholender, von Propylenoxid abgeleiteten Einheiten (PO) und terminalen Blöcken sich wiederholender, von Ethylenoxid abgeleiteten Einheiten (EO). Der zentrale Block sich wiederholender PO-Einheiten besitzt eine molare Masse von ca. 2750 g/mol, entsprechend ca. 47 PO-Einheiten ($y \approx 47$). Der zentrale Block sich wiederholender PO-Einheiten entspricht etwa 60 % des gesamten Molekulargewichts, d.h. die terminalen Blöcke sich wiederholender EO-Einheiten entsprechen etwa 40 % des gesamten Molekulargewichts. Jeder der beiden terminalen Blöcke weist somit eine molare Masse von ca. 925 g/mol auf, entsprechend ca. 21 EO-Einheiten auf ($x + z \approx 42$).

Als Träger wird Circosil® 0.1 (Cirkel GmbH & Co.KG, Haltern am See, Deutschland) verwendet. Circosil® 0.1 ist ein Calciumsilikathydrat-Pulver mit einer spezifischen Oberfläche von 40,39 m$^2$/g (bestimmt durch eine BET-Methode unter Verwendung von Stickstoff mit einem Gerät vom Typ Nova Station C (Quantachrome Instruments, Boynton Beach, Florida 33426, USA) und der Software Quantachrome NovaWin; Entgasungstemperatur 60,0 ° C, Entgasungszeit 5 Stunden, Adsorptionstemperatur 77,3 K, Equilibrierungszeit jeweils 120 Sekunden, Messung bei 5 Relativdrücken). Die Korngröße d50 beträgt 100 $\mu$m (bestimmt durch Dispergieren der Siebfraktionen in Wasser und Partikelgrößenmessung unter Verwendung eines Geräts des Typs CILAS 1064 (CILAS, Orleans, Frankreich) durch eine Laserbeugungsmethode).

30 Gewichtsteilen des Netzmittels werden auf 45 ° C erwärmt und auf 70 Gewichtsteile des Trägers aufgedüst. Dabei wird das Trägermaterial gerührt, um eine intensive Durchmischung zu erreichen. Nachdem das Netzmittel vollständig zum Träger gegeben worden ist, wird das Mischen für 15 Minuten fortgesetzt.

Beispiel 2: Herstellung einer Netzmittelzusammensetzung

30 Gewichtsteile des in Beispiel 1 verwendeten Netzmittels wurden nach dem gleichen Verfahren wie in Beispiel 1 auf 70 Gewichtsteile Kieselgur ("Celite 400 LC", Lehmann&Voss&Co. KG, Hamburg, Deutschland) aufgebracht.

Vergleichsbeispiel 1: Herstellung einer Trockenmischung

Als Trockenmischung wird eine gipsbasierte Spachtelmasse mit folgender Zusammensetzung hergestellt.

| | |
|---|---|
| Calciumsulfat-$\beta$-Halbhydrat | 250,00 g |
| Calciumsulfat-$\alpha$-Halbhydrat | 100,00 g |
| Kalksteinmehl ("Omyacarb 15 AL") | 150,00 g |
| Celluloseether ("Tylose MH 60000 P6") | 3,50 g |
| Rheologie-Modifizierer auf Acrylamidbasis ("Starvis® T 50 F") | 0,20 g |
| Rheologie-Modifizierer auf Stärkeetherbasis ("Starvis® SE 35 ") | 0,25 g |
| Verzögerer auf Polymerbasis ("HyCon® R 7200") | 0,04 g |

(fortgesetzt)

| | |
|---|---|
| Gesamtmasse der Trockenmischung: | 503,99 g |

Beispiel 3: Herstellung einer Trockenmischung

Als Trockenmischung wird die gipsbasierte Spachtelmasse gemäß Vergleichsbeispiel 1 unter Zusatz von 2,53 g der Netzmittelzusammensetzung aus Beispiel 1 hergestellt. Die Gesamtmischung (506,52 g) enthält somit 0,5 Gew.-% der Netzmittelzusammensetzung und 0,15 Gew.-% des Netzmittels.

Beispiel 4: Herstellung einer Trockenmischung

Als Trockenmischung wird eine gipsbasierte Spachtelmasse mit einer Zusammensetzung wie in Beispiel 3 hergestellt. Jedoch wird die in Beispiel 2 hergestellte Netzmittelzusammensetzung anstelle der in Beispiel 1 hergestellten Netzmittelzusammensetzung verwendet.

Vergleichsbeispiel 2: Herstellung einer Trockenmischung

Als Trockenmischung wird die gipsbasierte Spachtelmasse gemäß Vergleichsbeispiel 1 unter Zusatz von 0,76 g Pluronic® PE 9400 (ohne Trägermaterial) hergestellt. Die Gesamtmischung (504,75 g) enthält somit 0,15 Gew.-% des Netzmittels.

Vergleichsbeispiel 3: Herstellung einer Trockenmischung

Als Trockenmischung wird die gipsbasierte Spachtelmasse gemäß Vergleichsbeispiel 1 unter Zusatz von 2,53 g Pluronic® PE 9400 (ohne Trägermaterial) hergestellt. Die Gesamtmischung (506,52 g) enthält somit 0,5 Gew.-% des Netzmittels.

Testverfahren Benetzungszeit

10 g der Trockenmischung werden in einem Pulvertrichter platziert, aus dem man die Trockenmischung in ein Becherglas mit einem Innendurchmesser von ca. 70 mm fallen lässt, in dem sich ausreichend Leitungswasser (Wasserhärte ca. 11 ° dH) mit einer Temperatur von 23 ° C befindet, um eine Füllhöhe von 26 mm einzustellen (ca. 100 ml). Der Pulvertrichter wird so angebracht, dass die Fallhöhe der Trockenmischung zwischen Pulvertrichter und Wasseroberfläche 50 mm beträgt. Es wird die Zeit gemessen, die die Trockenmischung benötigt, um vollständig unter die Wasseroberfläche zu sinken. Diese Zeit wird als Benetzungszeit bezeichnet.
Folgende Benetzungszeiten wurden für die Trockenmischungen gemäß den Beispielen 3 und 4 sowie den Vergleichsbeispielen 1 bis 3 ermittelt.

| | Gehalt (bezogen auf Gesamtmischung) | | |
|---|---|---|---|
| | Netzmittelzusammensetzun g [Gew.-%] | Netzmittel [Gew.-%] | Benetzungszeit [s] |
| Vergleichsbeispiel 1 V147 | 0,0 | 0,0 | 24 (100 %) |
| Vergleichsbeispiel 2 V163 | -- | 0,15 | 18 (75 %) |
| Vergleichsbeispiel 3 V164 | -- | 0,5 | 20 (83 %) |
| Beispiel 3 V160 | 0,5 | 0,15 | 13 (54 %) |
| Beispiel 4 V162 | 0,5 | 0,15 | 15 (63 %) |

Die Benetzungszeit einer Trockenmischung ohne Netzmittel wird als Bezugspunkt als 100 % definiert. Diese Daten zeigen, dass die Benetzungszeit durch Zugabe eines ungeträgerten Netzmittels, d.h. eines Netzmittels, das sich nicht auf einem Träger befindet (Vergleichsbeispiel 2), auf 75 % vermindern lässt. Diese Benetzungszeit kann auch durch erhöhte Zugabe des ungeträgerten Netzmittels (Vergleichsbeispiel 3) nicht weiter vermindert werden. Durch Zugabe eines geträgerten Netzmittels (Beispiele 3 und 4) kann die Benetzungszeit auf 54 % bzw. 63 % vermindert werden, obwohl der Gehalt des Netzmittels in der Mischung nicht höher als im Vergleichsbeispiel 2 ist.
Durch die Netzmittelzusammensetzung gemäß der vorliegenden Erfindung kann somit eine verminderte Benetzungszeit der Trockenmischung ohne erhöhten Netzmitteleinsatz erreicht werden.

**Patentansprüche**

1. Netzmittelzusammensetzung umfassend (i) ein Netzmittel, worin das Netzmittel

   (ii) ein Blockcopolymer aus Ethylenoxid und Propylenoxid der Formel

   $$HO(CH_2CH_2O)_x\text{-}(CH_2CH(CH_3)O)_y\text{-}(CH_2CH_2O)_zH$$

   ist, wobei gilt

   $$1 \leq x \leq 100,$$

   $$1 \leq y \leq 100,$$

   $$1 \leq z \leq 100;$$

   (iii) ein Fettalkoholalkoxylat der Formel

   $$RO(CH_2CH_2O)_x\text{-}(CH_2CH(CH_3)O)_y\text{-}H$$

   ist, wobei gilt

   $$2 \leq x \leq 80,$$

   $y = 0,$
   $R = C_{8\text{-}18}$-Alkyl oder $C_{8\text{-}18}$-Alkenyl mit 1, 2 oder 3 Doppelbindungen;

   oder
   (iv) eine Kombination davon ist,
   und (v) einen pulverförmigen Träger, und die Netzmittelmittelzusammensetzung kein anionisches Netzmittel enthält.

2. Netzmittelzusammensetzung gemäß Anspruch 1, worin das Netzmittel

   (ii) ein Blockcopolymer aus Ethylenoxid und Propylenoxid der Formel

   $$HO(CH_2CH_2O)_x\text{-}(CH_2CH(CH_3)O)_y\text{-}(CH_2CH_2O)_zH$$

   ist, wobei gilt

   $$1 \leq x \leq 100,$$

   $$1 \leq y \leq 100,$$

   $$1 \leq z \leq 100,$$

   $$5\ \% \leq (44x + 44z) / (44x + 58y + 44z) \leq 90\ \%,$$

   bevorzugt

   $$1 \leq x \leq 100,$$

   $$1 \leq y \leq 100,$$

$$1 \leq z \leq 100,$$

$$10\% \leq (44x + 44z) / (44x + 58y + 44z) \leq 80\%,$$

weiter bevorzugt

$$1 \leq x \leq 90,$$

$$13 \leq y \leq 70,$$

$$1 \leq z \leq 90,$$

$$10\% \leq (44x + 44z) / (44x + 58y + 44z) \leq 80\%,$$

noch weiter bevorzugt

$$10 \leq x \leq 90,$$

$$25 \leq y \leq 60,$$

$$10 \leq z \leq 90,$$

$$10\% \leq (44x + 44z) / (44x + 58y + 44z) \leq 80\%,$$

Internal
besonders bevorzugt

$$10 \leq x \leq 90,$$

$$35 \leq y \leq 50,$$

$$10 \leq z \leq 90,$$

$$10\% \leq (44x + 44z) / (44x + 58y + 44z) \leq 80\%;$$

(iii) ein Fettalkoholalkoxylat der Formel

$$RO(CH_2CH_2O)_x\text{-}(CH_2CH(CH_3)O)_y\text{-}H$$

ist, wobei gilt

$$2 \leq x \leq 80,$$

$y = 0$,
$R = C_{8\text{-}18}$-Alkyl oder $C_{8\text{-}18}$-Alkenyl mit 1, 2 oder 3 Doppelbindungen, bevorzugt

$$30 \leq x \leq 80,$$

$y = 0$,
$R = C_{8\text{-}18}$-Alkyl oder $C_{8\text{-}18}$-Alkenyl mit 1, 2 oder 3 Doppelbindungen.

oder

(iv) eine Kombination davon ist.

3. Netzmittelzusammensetzung gemäß einem der Ansprüche 1 oder 2, worin der Träger ein anorganisches Material ist.

4. Netzmittelzusammensetzung gemäß einem der Ansprüche 1-3, worin der Träger ausgewählt ist aus der Gruppe bestehend aus Siliciumdioxid, Silikaten und Alumosilikaten, Erdalkalicarbonaten, Erdalkaliphosphaten, pulverförmige amorphe Gesteinsschmelzen und Mischungen davon.

5. Netzmittelzusammensetzung gemäß einem der Ansprüche 1-4, worin der Träger ausgewählt ist aus Erdalkalicarbonaten, Erdalkaliphosphaten, Erdalkalisilikaten, Erdalkalisilikathydraten und Mischungen davon,

   bevorzugt aus Magnesiumcarbonat, Calciumcarbonat, Magnesiumphosphat, Calciumphosphat, Magnesiumsilikat, Calciumsilikat, Magnesiumsilikathydrat, Calciumsilikathydrat und Mischungen davon,
   weiter bevorzugt aus Magnesiumsilikathydrat, Calciumsilikathydrat und Mischungen davon.

6. Netzmittelzusammensetzung gemäß einem der Ansprüche 1-4, worin der Träger ausgewählt ist aus Schichtsilikaten und Schichtalumosilikaten, natürlichem Siliziumdioxid, amorphem Siliziumdioxid, pyrolytischem Siliziumdioxid, gefälltem Siliziumdioxid und Mischungen davon.

7. Netzmittelzusammensetzung gemäß einem der Ansprüche 1-5, worin der Träger Calciumsilikathydrat ist.

8. Netzmittelzusammensetzung gemäß einem der Ansprüche 1-7, worin der Träger eine spezifische Oberfläche von mehr als 10 m$^2$/g, bevorzugt mehr als 20 m$^2$/g, weiter bevorzugt mehr als 30 m$^2$/g, noch weiter bevorzugt mehr als 40 m$^2$/g, bestimmt nach der BET-Methode mittels Stickstoffsorption, aufweist.

9. Netzmittelzusammensetzung gemäß einem der Ansprüche 1-7, worin der Träger eine spezifische Oberfläche von 1 bis 200 m$^2$/g, bevorzugt von 30 bis 150 m$^2$/g, bestimmt nach der BET-Methode mittels Stickstoffsorption, aufweist.

10. Netzmittelzusammensetzung gemäß einem der Ansprüche 1 bis 9, worin das Netzmittel in einer Menge von 1-50 Gew.-% bezogen auf das Gewicht des Trägers vorliegt.

11. Netzmittelzusammensetzung gemäß einem der Ansprüche 1 bis 9, worin das Netzmittel in einer Menge von 10-40 Gew.-%, bevorzugt 20-35 Gew.-%, bezogen auf das Gewicht des Trägers vorliegt.

12. Trockenmischung umfassend die Netzmittelzusammensetzung gemäß einem der Ansprüche 1-11 und wenigstens ein mineralisches Bindemittel, worin das mineralische Bindemittel bevorzugt ausgewählt ist aus hydraulischen Bindemitteln, nicht-hydraulischen Bindemitteln und Kombinationen davon.

13. Trockenmischung gemäß Anspruch 12, worin die Netzmittelzusammensetzung in einer Menge von 0,01-1 Gew.-% bezogen auf das Gewicht des wenigstens einen hydraulischen Bindemittels enthalten ist.

14. Nassmischung erhältlich durch Mischen der Trockenmischung gemäß Anspruch 12 oder Anspruch 13 mit Wasser.

15. Nassmischung gemäß Anspruch 14, worin Wasser in einer Menge von mindestens 20 Gew.-%, bevorzugt 20-150 Gew.-%, weiter bevorzugt 20-100 Gew.-%, noch weiter bevorzugt 20-60 Gew.-%, besonders bevorzugt 25-55 Gew.-% und am meisten bevorzugt 30-50 Gew.-%, bezogen auf das in der Trockenmischung enthaltene mineralische Bindemittel verwendet wird.

**Claims**

1. Wetting agent composition comprising (i) a wetting agent, wherein the wetting agent

   (ii) is a block copolymer of ethylene oxide and propylene oxide of the formula

$$HO(CH_2CH_2O)_x\text{-}(CH_2CH(CH_3)O)_y\text{-}(CH_2CH_2O)_zH$$

where the following applies:

$$1 \le x \le 100,$$

$$1 \le y \le 100,$$

$$1 \le z \le 100;$$

(iii) is a fatty alcohol alkoxylate of the formula

$$RO(CH_2CH_2O)_x\text{-}(CH_2CH(CH_3)O)_y\text{-}H$$

where the following applies: $2 \le x \le 80$,

y = 0,
R = $C_{8\text{-}18}$ alkyl or $C_{8\text{-}18}$ alkenyl with 1, 2 or 3 double bonds; or

(iv) is a combination thereof, and
(v) is a powdered carrier, and the wetting agent composition does not contain an anionic wetting agent.

2. The composition of the wetting agent according to claim 1, wherein the wetting agent

(ii) is a block copolymer of ethylene oxide and propylene oxide of the formula

$$HO(CH_2CH_2O)_x\text{-}(CH_2CH(CH_3)O)_y\text{-}(CH_2CH_2O)_zH$$

where the following applies:

$$1 \le x \le 100,$$

$$1 \le y \le 100,$$

$$1 \le z \le 100;$$

$$5\ \% \le (44x + 44z) / (44x + 58y + 44z) \le 90\ \%,$$

preferably

$$1 \le x \le 100,$$

$$1 \le y \le 100,$$

$$1 \le z \le 100;$$

$$10\ \% \le (44x + 44z) / (44x + 58y + 44z) \le 80\ \%,$$

more preferably

$$1 \le x \le 90,$$

$$13 \le y \le 70,$$

$$1 \le z \le 90;$$

$$10\ \% \le (44x + 44z) / (44x + 58y + 44z) \le 80\ \%,$$

even more preferably

$$10 \le x \le 90,$$

$$25 \le y \le 60,$$

$$10 \le z \le 90,$$

$$10\ \% \le (44x + 44z) / (44x + 58y + 44z) \le 80\ \%,$$

particularly preferred

$$10 \le x \le 90,$$

$$35 \le y \le 50,$$

$$10 \le z \le 90,$$

$$10\ \% \le (44x + 44z) / (44x + 58y + 44z) \le 80\ \%;$$

(iii) is a fatty alcohol alkoxylate of the formula

$$RO(CH_2CH_2O)_x\text{-}(CH_2CH(CH_3)O)_y\text{-}H$$

where the following applies: $2 \le x \le 80,$

y = 0,
R = $C_{8\text{-}18}$ alkyl or $C_{8\text{-}18}$ alkenyl with 1, 2 or 3 double bonds, preferably

$$30 \le x \le 80,$$

y=0,
R = $C_{8\text{-}18}$ alkyl or $C_{8\text{-}18}$ alkenyl with 1, 2 or 3 double bonds.

or
(iv) is a combination thereof.

3. A wetting agent composition according to any one of claims 1 or 2, wherein the carrier is an inorganic material.

4. A wetting agent composition according to any one of claims 1-3, wherein the carrier is selected from the group consisting of silicon dioxide, silicates and aluminosilicates, alkaline earth carbonates, alkaline earth phosphates, powdered amorphous rock melts and mixtures thereof.

5. A wetting agent composition according to any one of claims 1-4, wherein the carrier is selected from alkaline earth carbonates, alkaline earth phosphates, alkaline earth silicates, alkaline earth silicate hydrates and mixtures thereof,

preferably composed of magnesium carbonate, calcium carbonate, magnesium phosphate, calcium phosphate, magnesium silicate, calcium silicate, magnesium silicate hydrate, calcium silicate hydrate and mixtures thereof, furthermore, preferably magnesium silicate hydrate, calcium silicate hydrate and mixtures thereof.

6. A wetting agent composition according to any one of claims 1-4, wherein the carrier is selected from phyllosilicates and laminate aluminosilicates, natural silica, amorphous silica, pyrolytic silica, precipitated silica and mixtures thereof.

7. A wetting agent composition according to any one of claims 1-5, wherein the carrier is calcium silicate hydrate.

8. A wetting agent composition according to any one of claims 1-7, wherein the carrier has a specific surface area of more than 10 $m^2$/g, preferably more than 20 $m^2$/g, preferably more than 30$m^2$/g, even further preferably more than 40 $m^2$/g, determined by the BET method by means of nitrogen sorption.

9. Wetting agent composition according to any one of claims 1-7, wherein the carrier has a specific surface area of 1 to 200 $m^2$/g, preferably from 30 to 150 $m^2$/g, determined by the BET method by means of nitrogen sorption.

10. A wetting agent composition according to any one of claims 1 to 9, wherein the wetting agent is present in an amount of 1-50% by weight in relation to the weight of the carrier.

11. A wetting agent composition according to any one of claims 1 to 9, wherein the wetting agent is present in an amount of 10-40 wt.-%, preferably 20-35 wt.-%, based on the weight of the carrier.

12. A dry mixture comprising the wetting agent composition according to any one of claims 1-11 and at least one mineral binder wherein the mineral binder is preferably selected from hydraulic binders, non-hydraulic binders and combinations thereof.

13. A dry mixture according to claim 12, wherein the wetting agent composition is contained in an amount of 0.01-1% by weight of the weight of at least one hydraulic binder.

14. Wet mixture available by mixing the dry mixture of claim 12 or claim 13 with water.

15. A wet mixture according to claim 14, wherein water is used in an amount of at least 20% by weight, preferably 20-150% by weight, further preferably 20-100% by weight, still preferably 20-60% by weight, especially preferably 25-55% by weight and most preferably 30-50% by weight based on the mineral binder contained in the dry mixture.

**Revendications**

1. Composition mouillante comprenant (i) un agent mouillant, dans laquelle l'agent mouillant

   (ii) est un copolymère séquencé d'oxyde d'éthylène et d'oxyde de propylène de formule

   $$HO(CH_2CH_2O)_x\text{-}(CH_2CH(CH_3)O)_y\text{-}(CH_2CH_2O)_zH$$

   avec

   $$1 \leq x \leq 100,$$

   $$1 \leq y \leq 100,$$

   $$1 \leq z \leq 100 ;$$

   (iii) est un alcoxylate d'alcool gras de formule

   $$RO(CH_2CH_2O)_x\text{-}(CH_2CH(CH_3)O)_y\text{-}H$$

avec

$$2 \leq x \leq 80,$$

y = 0,
R = alkyle en $C_{8-18}$ ou alcényle en $C_{8-18}$ avec 1, 2 ou 3 doubles liaisons ; ou

(iv) est une combinaison de ceux-ci, et
(v) un support pulvérulent, et la composition mouillante ne contient pas d'agent mouillant anionique.

2. Composition mouillante selon la revendication 1, dans laquelle l'agent mouillant

(ii) est un copolymère séquencé d'oxyde d'éthylène et d'oxyde de propylène de formule

$$HO(CH_2CH_2O)_x\text{-}(CH_2CH(CH_3)O)_y\text{-}(CH_2CH_2O)_zH$$

avec

$$1 \leq x \leq 100,$$

$$1 \leq y \leq 100,$$

$$1 \leq z \leq 100 \; ;$$

$$5\ \% \leq (44x + 44z) / (44x + 58y + 44z) \leq 90\ \%,$$

de préférence

$$1 \leq x \leq 100,$$

$$1 \leq y \leq 100,$$

$$1 \leq z \leq 100 \; ;$$

$$10\ \% \leq (44x + 44z) / (44x + 58y + 44z) \leq 80\ \%,$$

plus préférablement

$$1 \leq x \leq 90,$$

$$13 \leq y \leq 70,$$

$$1 \leq z \leq 90 \; ;$$

$$10\ \% \leq (44x + 44z) / (44x + 58y + 44z) \leq 80\ \%,$$

encore plus préférablement

$$10 \leq x \leq 90,$$

$$25 \le y \le 60,$$

$$10 \le z \le 90,$$

$$10 \ \% \le (44x + 44z) / (44x + 58y + 44z) \le 80 \ \%,$$

tout particulièrement de préférence

$$10 \le x \le 90,$$

$$35 \le y \le 50,$$

$$10 \le z \le 90,$$

$$10 \ \% \le (44x + 44z) / (44x + 58y + 44z) \le 80 \ \% \ ;$$

(iii) est un alcoxylate d'alcool gras de formule

$$RO(CH_2CH_2O)_x\text{-}(CH_2CH(CH_3)O)_y\text{-}H$$

avec

$$2 \le x \le 80,$$

$y = 0$,
$R$ = alkyle en $C_{8\text{-}18}$ ou alcényle en $C_{8\text{-}18}$ avec 1, 2 ou 3 doubles liaisons,

de préférence

$$30 \le x \le 80,$$

$y = 0$,
$R$ = alkyle en $C_{8\text{-}18}$ ou alcényle en $C_{8\text{-}18}$ avec 1, 2 ou 3 doubles liaisons.

ou
(iv) est une combinaison de ceux-ci.

3. Composition mouillante selon l'une des revendications 1 ou 2, dans laquelle le support est un matériau inorganique.

4. Composition mouillante selon l'une des revendications 1 à 3, dans laquelle le support est choisi dans le groupe constitué par le dioxyde de silicium, les silicates et les aluminosilicates, les carbonates de métaux alcalino-terreux, les phosphates de métaux alcalino-terreux, les roches fondues amorphes pulvérulentes et leurs mélanges.

5. Composition mouillante selon l'une des revendications 1 à 4, dans laquelle le support est choisi parmi les carbonates de métaux alcalino-terreux, les phosphates de métaux alcalino-terreux, les silicates de métaux alcalino-terreux, les hydrosilicates de métaux alcalino-terreux et leurs mélanges,

de préférence parmi le carbonate de magnésium, le carbonate de calcium, le phosphate de magnésium, le phosphate de calcium, le silicate de magnésium, le silicate de calcium, l'hydrosilicate de magnésium, l'hydrosilicate de calcium et leurs mélanges,
plus préférablement parmi l'hydrosilicate de magnésium, l'hydrosilicate de calcium et leurs mélanges.

6. Composition mouillante selon l'une des revendications 1 à 4, dans laquelle le support est choisi parmi les silicates en feuillets et les aluminosilicates en feuillets, le dioxyde de silicium naturel, le dioxyde de silicium amorphe, le dioxyde de silicium pyrolytique, le dioxyde de silicium précipité et leurs mélanges.

7. Composition mouillante selon l'une des revendications 1 à 5, dans laquelle le support est l'hydrosilicate de calcium.

8. Composition mouillante selon l'une des revendications 1 à 7, dans laquelle le support présente une surface spécifique supérieure à 10 m$^2$/g, de préférence supérieure à 20 m$^2$/g, plus préférablement supérieure à 30 m$^2$/g, encore plus préférablement supérieure à 40 m$^2$/g, déterminée par la méthode BET par sorption d'azote.

9. Composition mouillante selon l'une des revendications 1 à 7, dans laquelle le support présente une surface spécifique de 1 à 200 m$^2$/g, de préférence de 30 à 150 m$^2$/g, déterminée par la méthode BET par sorption d'azote.

10. Composition mouillante selon l'une des revendications 1 à 9, dans laquelle l'agent mouillant est présent en une quantité de 1 à 50 % en poids par rapport au poids du support.

11. Composition mouillante selon l'une des revendications 1 à 9, dans laquelle l'agent mouillant est présent en une quantité de 10 à 40 % en poids, de préférence de 20 à 35 % en poids, par rapport au poids du support.

12. Mélange sec comprenant la composition mouillante selon l'une des revendications 1 à 11 et au moins un liant minéral, dans lequel le liant minéral est de préférence choisi parmi les liants hydrauliques, les liants non hydrauliques et leurs combinaisons.

13. Mélange sec selon la revendication 12, dans lequel la composition mouillante est contenue en une quantité de 0,01 à 1 % en poids par rapport au poids de l'au moins un liant hydraulique.

14. Mélange humide pouvant être obtenu par mélange du mélange sec selon la revendication 12 ou la revendication 13 avec de l'eau.

15. Mélange humide selon la revendication 14, dans lequel l'eau est utilisée en une quantité d'au moins 20 % en poids, de préférence de 20 à 150 % en poids, plus préférablement de 20 à 100 % en poids, encore plus préférablement de 20 à 60 % en poids, tout particulièrement de préférence de 25 à 55 % en poids et le plus préférablement de 30 à 50 % en poids, par rapport au liant minéral contenu dans le mélange sec.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2006258 B
- WO 2014114784 A1
- WO 2014114782 A1
- WO 2015185333 A1
- EP 1518923 A1
- EP 2952492 A
- EP 2397518 A
- WO 2016146402 A

- EP 1916227 A
- JP 2004091288 A
- US 2008141909 A
- WO 2013134208 A
- JP 2012197209 A
- WO 2010026155 A1
- WO 2011026720 A1
- WO 2011029711 A